(19) **Europäisches Patentamt / European Patent Office / Office européen des brevets**

(11) **EP 4 625 549 A1**

(12) **EUROPEAN PATENT APPLICATION**
published in accordance with Art. 153(4) EPC

(43) Date of publication:
01.10.2025 Bulletin 2025/40

(21) Application number: 23894226.2

(22) Date of filing: 01.09.2023

(51) International Patent Classification (IPC):
$H01M\ 4/66$ (2006.01)    $H01G\ 11/38$ (2013.01)
$H01G\ 11/56$ (2013.01)    $H01G\ 11/68$ (2013.01)
$H01G\ 11/70$ (2013.01)    $H01M\ 4/02$ (2006.01)
$H01M\ 4/13$ (2010.01)    $H01M\ 4/62$ (2006.01)
$H01M\ 10/0562$ (2010.01)    $H01M\ 10/058$ (2010.01)

(52) Cooperative Patent Classification (CPC):
H01G 11/38; H01G 11/56; H01G 11/68;
H01G 11/70; H01M 4/02; H01M 4/13; H01M 4/62;
H01M 4/66; H01M 10/0562; H01M 10/058;
Y02E 60/10

(86) International application number:
PCT/JP2023/032148

(87) International publication number:
WO 2024/111211 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.11.2022 JP 2022187741

(71) Applicants:
• Panasonic Holdings Corporation
Osaka, 571-8501 (JP)
• TOYOTA JIDOSHA KABUSHIKI KAISHA
Toyota-shi
Aichi 471-8571 (JP)

(72) Inventors:
• OSHIMA, Tatsuya
Osaka 571-0057 (JP)

• NISHIDA, Kouji
Osaka 571-0057 (JP)
• KOSHIZUKA, Tsutomu
Osaka 571-0057 (JP)
• TSUJI, Nobuhiro
Shiga 520-2151 (JP)
• MURATA, Manabu
Shiga 520-2151 (JP)
• KAWAKAMI, Hisashi
Shiga 520-2151 (JP)
• ISHII, Yasuo
Shiga 520-2151 (JP)
• IWASAKI, Masahiro
Aichi 471-8571 (JP)

(74) Representative: Eisenführ Speiser
Patentanwälte Rechtsanwälte PartGmbB
Postfach 10 60 78
28060 Bremen (DE)

(54) **CURRENT COLLECTOR, ELECTRODE PLATE, AND BATTERY**

(57) A current collector 100 according to the present disclosure includes: a substrate 101; and a coating layer 102 coating the substrate 101, wherein the coating layer 102 includes conductive carbon 103 and a first binder 104, the first binder 104 includes an aromatic super engineering plastic, and a moisture content calculated based on moisture generated from the current collector 100 when heated to 200°C is 200 mass ppm or less.

FIG.1

**Description**

TECHNICAL FIELD

The present disclosure relates to a current collector, an electrode plate, and a battery.

BACKGROUND ART

A current collector is an essential component of electrochemical devices such as batteries and capacitors. An electrode layer, such as an active material layer, is disposed on the current collector. The adhesion between the current collector and the electrode layer affects the performance of electrochemical devices. A current collector that includes a substrate and a coating layer is known as a current collector capable of enhancing adhesion.

Patent Literature 1 describes a current collector for power storage devices, in which a coating layer is formed on one or both surfaces of a sheet-shaped metal substrate. The coating layer includes a powdered carbon material and a binder. The binder contains polyvinylidene fluoride (PVDF). The coating layer enhances the adhesion between the metal substrate and an active material layer.

Patent Literature 2 describes a current collector in which a polymer layer including a carbon material on the surface of a substrate is included. It is disclosed that the moisture content of the current collector, as determined by moisture measurement using the Karl Fischer method, is 275 ppm or less.

CITATION LIST

Patent Literature

Patent Literature 1: JP 2018-190527 A
Patent Literature 2: JP 2010-3614 A

SUMMARY OF INVENTION

Technical Problem

The present disclosure aims to provide a current collector suitable for achieving both the productivity of electrochemical devices and the high-temperature characteristics of electrochemical devices.

Solution to Problem

The present disclosure provides a current collector including:

a substrate; and
a coating layer coating the substrate, wherein
the coating layer includes conductive carbon and a first binder,
the first binder includes an aromatic super engineering plastic, and
a moisture content calculated based on moisture generated from the current collector when heated to 200°C is 200 mass ppm or less.

Advantageous Effects of Invention

According to the present disclosure, it is possible to provide a current collector suitable for achieving both the productivity of electrochemical devices and the high-temperature characteristics of electrochemical devices.

BRIEF DESCRIPTION OF DRAWINGS

FIG. 1 is a cross-sectional view of a current collector according to Embodiment 1.
FIG. 2 is a cross-sectional view of an electrode plate according to Embodiment 2.

FIG. 3 is a cross-sectional view of a battery according to Embodiment 3.
FIG. 4 is a cross-sectional view of a battery according to a modification.

DESCRIPTION OF EMBODIMENTS

(Findings Underlying the Present Disclosure)

The presence of moisture is often unfavorable for electrochemical devices. This is because the degradation of electrochemical devices is accelerated by, for example, a reaction between water and an electrolyte or a reaction between water and an active material. For example, in the case of a lithium secondary battery, the presence of moisture adversely affects its cycle characteristics. In particular, such an adverse effect becomes pronounced when a lithium secondary battery is stored or operated at high temperatures.

As described in Patent Literature 1 and Patent Literature 2, PVDF is commonly used as a material for the coating layer of conventional current collectors. PVDF has poor hygroscopicity and accordingly is considered suitable for fabricating current collectors with low moisture content.

On the other hand, in the manufacture of electrochemical devices, an electrode paste is often applied to a current collector to form a coating film, the coating film is dried, and the coating film is compressed. Thus, an electrode including a current collector and an electrode layer is formed. Here, it is impossible to make the size of the coating film exactly coincide with the size of the coating layer of the current collector, and accordingly the coating film is smaller than the coating layer of the current collector. That is, the coating layer of the current collector sometimes has a portion that is not coated with the coating film. Accordingly, in compressing the coating film, the coating layer of the current collector may adhere to production equipment, such as a press machine. In this case, a temporary suspension of the production line is required for maintenance of the production equipment. Suspending the production line leads to a deterioration in productivity.

Adhesion of the coating layer to production equipment tends to occur when a resin having slightly poor heat resistance, such as PVDF, is used as the coating layer of the current collector. While it is conceivable to use a resin having excellent heat resistance as the coating layer, such a resin sometimes exhibits a high moisture content due to unreacted components. That is, simply replacing PVDF with a resin having excellent heat resistance may lead to a deterioration in the high-temperature characteristics of electrochemical devices.

Therefore, there is a demand for a technique for achieving both the productivity of electrochemical devices and the high-temperature characteristics of electrochemical devices.

Embodiments of the present disclosure are described below with reference to the drawings. The present disclosure is not limited to the following embodiments.

(Embodiment 1)

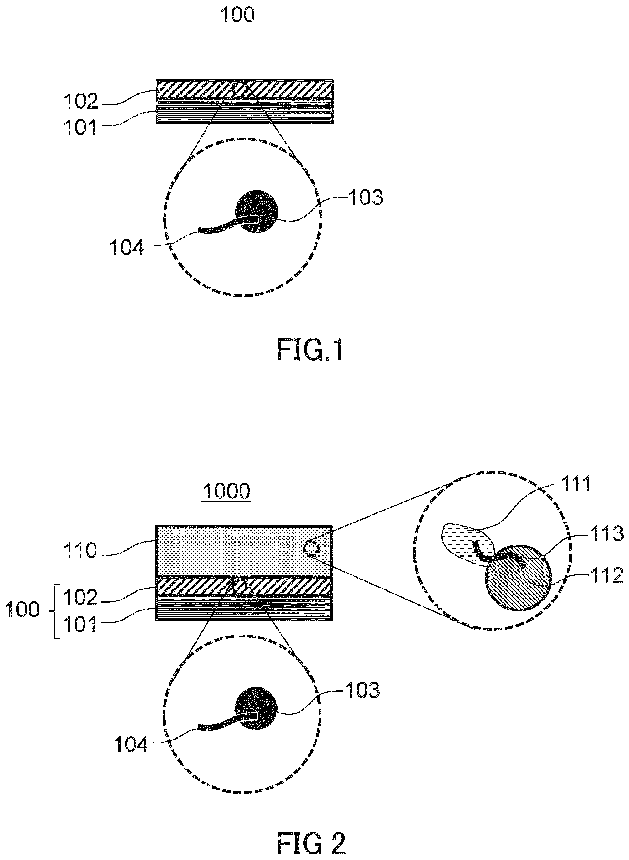

FIG. 1 is a cross-sectional view of a current collector 100 according to Embodiment 1. The current collector 100 includes a substrate 101 and a coating layer 102. The substrate 101 is coated with the coating layer 102. The coating layer 102 is in contact with the substrate 101. The coating layer 102 includes conductive carbon 103 and a first binder 104. The first binder 104 includes an aromatic super engineering plastic. The moisture content calculated based on moisture generated from the current collector 100 when heated to 200°C is 200 mass ppm or less. Moisture can be measured by the Karl Fischer method.

According to the above configuration, even under high-temperature compression of a member including the current collector 100 during the manufacture of an electrochemical device, it is possible to suppress the adhesion between the coating layer and the press machine, thereby enhancing the productivity of the electrochemical device. Furthermore, by controlling the moisture content of the current collector 100, it is possible to suppress the deterioration of electrode materials such as active materials and electrolytes, thereby enhancing the high-temperature characteristics of the electrochemical device. For example, the high-temperature cycle characteristics of a battery can be enhanced. According to the present embodiment, it is possible to achieve both the productivity of electrochemical devices and the high-temperature characteristics of electrochemical devices.

By adjusting the moisture content of the current collector 100 when heated to 200°C to 200 mass ppm or less, the high-temperature characteristics of an electrochemical device can be enhanced.

The current collector 100 can be used, for example, in electrode plates for electrochemical devices such as batteries and capacitors. The batteries may be nonaqueous electrolyte batteries or solid-state batteries. The current collector 100 is particularly suitable for all-solid-state secondary batteries.

<Current Collector>

In the current collector 100, the coating layer 102 contains an aromatic super engineering plastic.

The moisture content calculated based on moisture generated from the current collector 100 when heated to 200°C may be 1 mass ppm or more and 180 mass ppm or less, 5 mass ppm or more and 150 mass ppm or less, 10 mass ppm or more and 100 mass ppm or less, or 20 mass ppm or more and 80 mass ppm or less.

Moisture generated when heating can be determined by coulometric titration using a moisture meter. The principle of moisture measurement is based on the Karl Fischer method. For example, moisture ($\mu$g) generated from the current collector 100 when heated from 100°C to 200°C or 300°C is measured using a moisture meter (CA-310) manufactured by Nittoseiko Analytech Co., Ltd. The ratio of moisture ($\mu$g) to the mass (g) of the current collector 100 is the moisture content ($\mu$g/g = mass ppm).

The moisture content calculated based on moisture generated from the current collector 100 when heated to 300°C may be 1 mass ppm or more and 400 mass ppm or less, 5 mass ppm or more and 300 mass ppm or less, 10 mass ppm or more and 200 mass ppm or less, or 20 mass ppm or more and 150 mass ppm or less. By adjusting the moisture content of the current collector 100 when heated to 300°C to 1 mass ppm or more and 400 mass ppm or less, the long-term cycle characteristics of an electrochemical device can be enhanced.

The current collector 100 has, for example, a plate-like or foil-like shape. The thickness of the current collector 100 may be 0.1 $\mu$m or more and 1 mm or less, 1 $\mu$m or more and 100 $\mu$m or less, or 10 $\mu$m or more and 50 $\mu$m or less. When the thickness of the current collector 100 is 0.1 $\mu$m or more, the strength of the current collector 100 is enhanced, thereby suppressing damage to the current collector 100. When the thickness of the current collector 100 is 1 mm or less, the weight of the current collector 100 is reduced, thereby enabling an enhancement in the energy density of an electrochemical device. That is, by appropriately adjusting the thickness of the current collector 100, it is possible to stably manufacture an electrochemical device and enhance the energy density of an electrochemical device.

The tensile strength of the current collector 100 is, for example, 120 N/mm$^2$ or more. According to such a configuration, even under high-temperature compression of a member including the current collector 100, breakage of the current collector is suppressed, enabling a further enhancement in the productivity of an electrochemical device. The tensile strength of the current collector 100 may be 150 N/mm$^2$ or more, 200 N/mm$^2$ or more, or 250 N/mm$^2$ or more. The upper limit of the tensile strength of the current collector 100 is not particularly limited. The upper limit is, for example, 800 N/mm$^2$.

<Coating Layer>

The coating layer 102 may coat the entire principal surface of the substrate 101 or partially coat the principal surface of the substrate 101. The "principal surface" means the surface of the substrate 101 having the largest area. The coating layer 102 may have a shape of dots, stripes, or the like.

Examples of the conductive carbon 103 contained in the coating layer 102 include graphite, such as natural graphite and artificial graphite, carbon black, such as acetylene black (AB) and Ketjenblack (KB), conductive fibers, such as carbon fiber (CF), vapor-phase grown carbon (VGCF (registered trademark)), and carbon nanotubes (CNT), and nanocarbons, such as graphene. As the conductive carbon, one conductive carbon selected from these may be used alone, or two or more conductive carbons selected from these may be used.

The first binder 104 included in the coating layer 102 contains an aromatic super engineering plastic. An aromatic super engineering plastic means an engineering plastic that contains an aromatic ring in a main chain backbone and has a continuous use temperature of 150°C or more. Examples of aromatic super engineering plastics include polybenzimidazole (PBI), polyimide (PI), polyetherketoneetherketoneketone (PEKEKK), polyamide-imide (PAI), polyetheretherketone (PEEK), polyetherketone (PEK), liquid crystal polymer (LCP), polyphenylene sulfide (PPS), polyethersulfone (PES), polyphenylsulfone (PPSU), polyetherimide (PEI), polysulfone (PSU), polyparaphenylene (PPP), and polyarylate (PAR). As the first binder 104, a mixture including two or more selected from these may be used. Aromatic super engineering plastics exhibit high heat resistance. Accordingly, when an aromatic super engineering plastic is included as the first binder 104 in the coating layer 102, the coating layer 102 is less likely to adhere to production equipment, such as a press machine, even under high-temperature compression of a member including the current collector 100. Consequently, the productivity of an electrochemical device is enhanced.

The aromatic super engineering plastic may contain at least one selected from the group consisting of a polyimide and a polyethersulfone.

The degree of imidization of the polyimide may be 90% or more. A degree of imidization of 90% or more indicates a small amount of polyamic acid contained in the polyimide. Polyamic acid contains a carboxylic acid group and easily adsorbs water. Polyamic acid also releases water during cyclization. Accordingly, by achieving a degree of imidization of 90% or more, that is, by reducing the content of the polyamic acid, it is possible to reduce the moisture content of the current collector 100. The degree of imidization of the polyimide may be 95% or more, or the degree of imidization may be 99% or more.

The degree of imidization means the reaction rate of an imidization reaction in which polyamic acid, which is a precursor of a polyimide, is heated to form the polyimide through thermal imidization. The degree of imidization of the polyimide can be determined by attenuated total reflection (ATR) using a Fourier transform infrared spectrometer (FT-IR). For example, a compact FT-IR (ALPHA II) manufactured by Bruker Corporation can be used for the measurement. In more detail, the ratio of the absorbance ($a_{CN}$) at around 1350 cm$^{-1}$, derived from a CN stretching vibration of the polyimide contained on the surface of the coating layer 102, to the absorbance ($a_{Ar}$) at around 1500 cm$^{-1}$, derived from the benzene ring skeleton of the polyimide contained on the surface of the coating layer 102, is determined. Subsequently, a sample is prepared by processing the measurement target polyimide under temperature and time conditions that allow complete imidization (degree of imidization: 100%), and the ratio of the absorbance ($A_{CN}$) at around 1350 cm$^{-1}$, derived from a CN stretching vibration of the polyimide, to the absorbance ($A_{Ar}$) at around 1500 cm$^{-1}$, derived from the benzene ring skeleton, is determined. Then, the degree of imidization is determined by the following calculation formula.

$$\text{Degree of imidization (\%)} = [(a_{CN}/a_{Ar})/(A_{CN}/A_{Ar})] \times 100$$

Polyimides tend to exhibit higher heat resistance. Accordingly, using a polyimide enhances the effect of suppressing the adhesion of the coating layer 102 to the production equipment. Consequently, the productivity of an electrochemical device is further enhanced. The polyimide may be a soluble polyimide from which a polyimide solution can be prepared. Soluble polyimides facilitate the preparation of a polyimide with a high degree of imidization, and accordingly are more advantageous in terms of reducing moisture content.

Polyethersulfones tend to exhibit higher heat resistance. Accordingly, using a polyethersulfone enhances the effect of suppressing the adhesion of the coating layer 102 to the production equipment. Consequently, the productivity of an electrochemical device is further enhanced.

The first binder 104 may include an additional binder other than the aromatic super engineering plastic. Alternatively, the first binder 104 may be the aromatic super engineering plastic. In other words, the first binder 104 may contain only the aromatic super engineering plastic.

Examples of the additional binder include polyvinylidene fluoride (PVDF), polytetrafluoroethylene (PTFE), polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester (PMMA), polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethyl cellulose, and ethyl cellulose. The additional binder can also be a copolymer synthesized using two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, isoprene, styrene, pentafluoropropylene, fluoromethyl vinyl ether, acrylic acid ester, acrylic acid, and hexadiene. As the additional binder, one selected from these may be used alone, or a mixture including two or more selected from these may be used.

The additional binder may contain an elastomer for its excellent binding properties. An elastomer means a polymer with rubber elasticity. The elastomer used as the binder may be a thermoplastic elastomer or a thermosetting elastomer. Examples of the elastomer include, in addition to the styrenic elastomers described above, butadiene rubber (BR), isoprene rubber (IR), chloroprene rubber (CR), acrylonitrile-butadiene rubber (NBR), hydrogenated isoprene rubber (HIR), hydrogenated butyl rubber (HIIR), hydrogenated nitrile rubber (HNBR), and acrylate-butadiene rubber (ABR). A mixture including two or more selected from these may be used.

The content of the first binder 104 in the coating layer 102 is not particularly limited and is, for example, 20 mass% or more and 95 mass% or less, and may be 40 mass% or more and 90 mass% or less, or 55 mass% or more and 85 mass% or less. When the content of the first binder 104 is 95 mass% or less, the electrical conductivity of the coating layer 102 is enhanced, enabling higher output of an electrochemical device. When the content of the first binder 104 is 20 mass% or more, the presence of a sufficient amount of the first binder 104 and the like tend to suppress peeling of the coating layer 102.

The coating layer 102 may include a conductive material other than the conductive carbon 103. Examples of the conductive material other than the conductive carbon include a conductive fiber, such as a metal fiber, fluorinated carbon, a conductive powder, such as aluminum powder, a conductive whisker, such as a zinc oxide whisker or a potassium titanate whisker, a conductive metal oxide, such as titanium oxide, and a conductive polymer, such as polyaniline, polypyrrole, or polythiophene.

The coating layer 102 may contain an element or component other than the conductive carbon 103 and the first binder 104. Such other element or component can be added to the coating layer 102 through contamination or the like. For example, an unavoidable oxide film or the like may be formed on a portion of the surface of the coating layer 102. That is, the coating layer 102 may contain an unavoidable oxide or the like.

The coating layer 102 can be fabricated, for example, by sputtering the material of the coating layer 102 onto the surface of the substrate 101. The coating layer 102 may be fabricated by applying a solution or dispersion including the material of the coating layer 102 to the surface of the substrate 101. The application of the solution or dispersion can be performed using a gravure coater, a die coater, or the like.

The mass per unit area of the coating layer 102 is not particularly limited and may be, for example, 0.01 g/m$^2$ or more and 5 g/m$^2$ or less, 0.1 g/m$^2$ or more and 3 g/m$^2$ or less, or 0.5 g/m$^2$ or more and 2 g/m$^2$ or less. When the mass per unit area is 0.01 g/m$^2$ or more, contact between the substrate 101 and the electrode layer can be prevented, thereby suppressing corrosion of the substrate 101. When the mass per unit area is 5 g/m$^2$ or less, the electrical resistance of the coating layer 102 decreases, enabling easy high-output operation of an electrochemical device.

The thickness of the coating layer 102 is not particularly limited and may be, for example, 0.001 $\mu$m or more and 10 $\mu$m or less, 0.01 $\mu$m or more and 5 $\mu$m or less, or 0.1 $\mu$m or more and 3 $\mu$m or less. When the thickness of the coating layer 102 is 0.001 $\mu$m or more, contact between the substrate 101 and the electrode layer can be prevented, thereby suppressing corrosion of the substrate 101. When the thickness of the coating layer 102 is 10 $\mu$m or less, the electrical resistance of the coating layer 102 decreases, enabling easy high-output operation of an electrochemical device.

<Substrate>

The substrate 101 has, for example, a plate-like or foil-like shape. The material of the substrate 101 may be a metal or an alloy. Examples of the metal include aluminum, iron, nickel, and copper. Examples of the alloy include aluminum alloys and stainless steel (SUS). The substrate 101 may include aluminum or an aluminum alloy.

The substrate 101 may contain aluminum as a main component. "The substrate 101 contains aluminum as a main component" means that the content of aluminum in the substrate 101 is 50 mass% or more. Aluminum is a lightweight metal with high electrical conductivity. Accordingly, an electrode plate 1000 that includes the substrate 101 containing aluminum as a main component can enhance the gravimetric energy density of an electrochemical device. The substrate 101 containing aluminum as a main component may further contain an element other than aluminum. When the substrate 101 consists of aluminum, that is, when the content of aluminum in the substrate 101 is 100%, the strength of the substrate 101 deteriorates in some cases. Accordingly, the substrate 101 may contain an element other than aluminum. The content of aluminum in the substrate 101 may be 99 mass% or less, or 90 mass% or less.

The substrate 101 may contain an aluminum alloy. Aluminum alloys are lightweight and have high strength. Accordingly, the current collector 100 including the substrate 101 containing an aluminum alloy can achieve an electrochemical device with both high gravimetric energy density and high durability. The aluminum alloy is not particularly limited, examples of which include Al-Cu alloys, Al-Mn alloys, Al-Mn-Cu alloys, and Al-Fe-Cu alloys.

The material of the substrate 101 may be an Al-Mn alloy. Al-Mn alloys have high strength and have excellent formability and corrosion resistance. Accordingly, the current collector 100 including the substrate 101 containing an Al-Mn alloy can enhance the cycle characteristics of an electrochemical device.

The thickness of the substrate 101 is not particularly limited and is, for example, 0.1 $\mu$m or more and 50 $\mu$m or less, and may be 1 $\mu$m or more and 30 $\mu$m or less. When the thickness of the substrate 101 is 0.1 $\mu$m or more, the strength of the substrate 101 is enhanced, thereby suppressing damage to the substrate 101. When the thickness of the substrate 101 is 50 $\mu$m or less, the mass of the substrate 101 decreases, enabling an enhancement in the gravimetric energy density of an electrochemical device.

(Embodiment 2)

FIG. 2 is a cross-sectional view of the electrode plate 1000 according to Embodiment 2. The electrode plate 1000 according to Embodiment 2 includes the current collector 100 and an electrode layer 110. The current collector 100 is the one described with reference to Embodiment 1. The coating layer 102 of the current collector 100 is positioned between the substrate 101 and the electrode layer 110 and is in contact with each of the substrate 101 and the electrode layer 110. The electrode layer 110 includes a second binder 113.

According to the electrode plate 1000, even under high-temperature compression of the electrode plate 1000 during the manufacture of an electrochemical device, it is possible to suppress the adhesion between the coating layer 102 and the press machine, thereby enhancing the productivity of the electrochemical device. Furthermore, by controlling the moisture content of the current collector 100, it is possible to suppress the deterioration of materials such as an active material 112 and a solid electrolyte 111, thereby enhancing the high-temperature characteristics of the electrochemical device. Typically, the high-temperature cycle characteristics of a battery can be enhanced. According to the present embodiment, it is possible to achieve both the productivity of electrochemical devices and the high-temperature characteristics of electrochemical devices.

The electrode layer 110 may include the solid electrolyte 111, the active material 112, or both of these. The electrode plate 1000 is suitable for an electrochemical device, particularly a battery, in which the electrode layer 110 includes at least one selected from the solid electrolyte 111 and the active material 112.

<Solid Electrolyte>

The solid electrolyte 111 may include a sulfide solid electrolyte. The sulfide solid electrolyte may contain lithium. By using a sulfide solid electrolyte containing lithium as the solid electrolyte 111, it is possible to manufacture a lithium secondary battery using the electrode plate 1000 including this sulfide solid electrolyte.

The solid electrolyte 111 may include a solid electrolyte other than a sulfide solid electrolyte, such as an oxide solid electrolyte, a halide solid electrolyte, a polymer solid electrolyte, or a complex hydride solid electrolyte. Alternatively, the solid electrolyte 111 may be a sulfide solid electrolyte. In other words, the solid electrolyte 111 may contain only a sulfide solid electrolyte.

In the present disclosure, the "oxide solid electrolyte" means a solid electrolyte that contains oxygen. The oxide solid electrolyte may further contain, as an anion other than oxygen, an anion other than both sulfur and a halogen element.

In the present disclosure, the "halide solid electrolyte" means a solid electrolyte that contains a halogen element and is free of sulfur. In the present disclosure, a sulfur-free solid electrolyte means a solid electrolyte represented by a composition formula that does not contain a sulfur element. Accordingly, a solid electrolyte containing a trace amount of a sulfur component, for example, 0.1 mass% or less of sulfur, is encompassed in sulfur-free solid electrolytes. The halide solid electrolyte may further contain oxygen as an anion other than a halogen element.

The sulfide solid electrolyte can be, for example, $Li_2S-P_2S_5$, $Li_2S-SiS_2$, $Li_2S-B_2S_3$, $Li_2S-GeS_2$, $Li_{3.25}Ge_{0.25}P_{0.75}S_4$, or $Li_{10}GeP_2S_{12}$. To these, LiX, $Li_2O$, $MO_q$, $Li_pMO_q$, or the like may be added. The element X in "LiX" is at least one selected from the group consisting of F, Cl, Br, and I. The element M in "$MO_q$" and "$Li_pMO_q$" is at least one selected from the group consisting of P, Si, Ge, B, Al, Ga, In, Fe, and Zn. The symbols p and q in "$MO_q$" and "$Li_pMO_q$" are each independently a natural number.

The sulfide solid electrolyte may be, for example, a $Li_2S-P_2S_5$-based glass ceramic. To the $Li_2S-P_2S_5$-based glass ceramic, LiX, $Li_2O$, $MO_q$, $Li_pMO_q$, or the like may be added, and two or more selected from LiCl, LiBr, and LiI may be added. $Li_2S-P_2S_5$-based glass ceramics are relatively soft materials, and accordingly the electrode plate 1000 containing a $Li_2S-P_2S_5$-based glass ceramic enables the manufacture of a highly durable battery.

The oxide solid electrolyte can be, for example, a NASICON-type solid electrolyte typified by $LiTi_2(PO_4)_3$ and element-substituted substances thereof, a $(LaLi)TiO_3$-based perovskite-type solid electrolyte, a LISICON-type solid electrolyte typified by $Li_{14}ZnGe_4O_{16}$, $Li_4SiO_4$, and $LiGeO_4$ and element-substituted substances thereof, a garnet-type solid electrolyte typified by $Li_7La_3Zr_2O_{12}$ and element-substituted substances thereof, $Li_3PO_4$ and N-substituted substances thereof, or glass or glass ceramics based on a Li-B-O compound, such as $LiBO_2$ or $Li_3BO_3$, to which $Li_2SO_4$, $Li_2CO_3$, or the like is added.

The halide solid electrolyte includes, for example, Li, M1, and X. M1 is at least one selected from the group consisting of metalloid elements and metal elements other than Li. X is at least one selected from the group consisting of F, Cl, Br, and I. Halide solid electrolytes have high thermal stability and accordingly can enhance the safety of a battery. Furthermore, since halide solid electrolytes are free of sulfur, the generation of hydrogen sulfide gas can be suppressed.

In the present disclosure, the "metalloid elements" are B, Si, Ge, As, Sb, and Te.

In the present disclosure, the "metal elements" are all the elements included in Groups 1 to 12 of the periodic table except hydrogen and all the elements included in Groups 13 to 16 of the periodic table except B, Si, Ge, As, Sb, Te, C, N, P, O, S, and Se.

That is, in the present disclosure, the "metalloid elements" and the "metal elements" are each a group of elements that can become a cation when forming an inorganic compound with a halogen element.

For example, the halide solid electrolyte may be a material represented by the following composition formula (1).

$$Li_\alpha M1_\beta X_\gamma \qquad \text{Formula (1)}$$

In the above composition formula (1), $\alpha$, $\beta$, and $\gamma$ are each independently a value greater than 0. The value of $\gamma$ can be, for example, 4 or 6.

According to the above configuration, the ionic conductivity of the halide solid electrolyte is enhanced. Accordingly, the ionic conductivity of the electrode plate 1000 can be enhanced. This electrode plate 1000, when used in a battery, can further enhance the cycle characteristics of the battery.

In the above composition formula (1), the element M1 may contain Y (= yttrium). That is, the halide solid electrolyte may contain Y as a metal element.

The halide solid electrolyte containing Y may be represented, for example, by the following composition formula (2).

$$Li_a Me_b Y_c X_6 \qquad \text{Formula (2)}$$

In the formula (2), a, b, and c may satisfy $a + mb + 3c = 6$ and $c > 0$. The element Me is at least one selected from the group consisting of metalloid elements and metal elements other than both Li and Y. The value of m represents the valence of the element Me. When the element Me contains a plurality of types of elements, mb represents the sum of the products of the composition ratio of each element multiplied by the valence of the element. For example, when Me contains an element Me1 and an element Me2 where the composition ratio of the element Me1 is $b_1$, the valence of the element Me1 is $m_1$, the composition ratio of the element Me2 is $b_2$, and the valence of the element Me2 is $m_2$, then mb is expressed as $m_1 b_1 + m_2 b_2$. In the above composition formula (2), the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

The halide solid electrolyte can be, for example, any of the following materials. According to the following materials, the ionic conductivity of the solid electrolyte 111 is further enhanced, enabling a further enhancement in the output characteristics of a battery.

The halide solid electrolyte may be a material represented by the following composition formula (A1).

$$Li_{6-3d}Y_dX_6 \qquad \text{Formula (A1)}$$

In the composition formula (A1), the element X is at least one selected from the group consisting of Cl, Br, and I. In the composition formula (A1), d satisfies $0 < d < 2$.

The halide solid electrolyte may be a material represented by the following composition formula (A2).

$$Li_3YX_6 \qquad \text{Formula (A2)}$$

In the composition formula (A2), the element X is at least one selected from the group consisting of Cl, Br, and I.

The halide solid electrolyte may be a material represented by the following composition formula (A3).

$$Li_{3-3\delta}Y_{1+\delta}Cl_6 \qquad \text{Formula (A3)}$$

In the composition formula (A3), $\delta$ satisfies $0 < \delta \leq 0.15$.

The halide solid electrolyte may be a material represented by the following composition formula (A4).

$$Li_{3-3\delta}Y_{1+\delta}Br_6 \qquad \text{Formula (A4)}$$

In the composition formula (A4), $\delta$ satisfies $0 < \delta \leq 0.25$.

The halide solid electrolyte may be a material represented by the following composition formula (A5).

$$Li_{3-3\delta+a}Y_{1+\delta-a}Me_aCl_{6-x-y}Br_xI_y \qquad \text{Formula (A5)}$$

In the composition formula (A5), the element Me is at least one selected from the group consisting of Mg, Ca, Sr, Ba, and Zn.

Furthermore, in the above composition formula (A5), the following are satisfied:

$$-1 < \delta < 2,$$

$$0 < a < 3,$$

$$0 < (3 - 3\delta + a),$$

$$0 < (1 + \delta - a),$$

$$0 \leq x \leq 6,$$

$$0 \leq y \leq 6,$$

and

$$(x + y) \leq 6.$$

The halide solid electrolyte may be a material represented by the following composition formula (A6).

$$Li_{3-3\delta}Y_{1+\delta-a}Me_aCl_{6-x-y}Br_xI_y \qquad \text{Formula (A6)}$$

In the composition formula (A6), the element Me is at least one selected from the group consisting of Al, Sc, Ga, and Bi.

Furthermore, in the above composition formula (A6), the following are satisfied:

$$-1 < \delta < 1,$$

$$0 < a < 2,$$

$$0 < (1 + \delta - a),$$

$$0 \leq x \leq 6,$$

$$0 \leq y \leq 6,$$

and

$$(x + y) \leq 6.$$

The halide solid electrolyte may be a material represented by the following composition formula (A7).

$$Li_{3-3\delta-a}Y_{1+\delta-a}Me_aCl_{6-x-y}Br_xI_y \qquad \text{Formula (A7)}$$

In the above composition formula (A7), the element Me is at least one selected from the group consisting of Zr, Hf, and Ti.

Furthermore, in the above composition formula (A7), the following are satisfied:

$$-1 < \delta < 1,$$

$$0 < a < 1.5,$$

$$0 < (3 - 3\delta - a),$$

$$0 < (1 + \delta - a),$$

$$0 \leq x \leq 6,$$

$$0 \leq y \leq 6,$$

and

$$(x + y) \leq 6.$$

The halide solid electrolyte may be a material represented by the following composition formula (A8).

$$Li_{3-3\delta-2a}Y_{1+\delta-a}Me_aCl_{6-x-y}Br_xI_y \qquad \text{Formula (A8)}$$

In the composition formula (A8), the element Me is at least one selected from the group consisting of Ta and Nb.

Furthermore, in the above composition formula (A8), the following are satisfied:

$$-1 < \delta < 1,$$

$$0 < a < 1.2,$$

$$0 < (3 - 3\delta - 2a),$$

$$0 < (1 + \delta - a),$$

$$0 \leq x \leq 6,$$

$$0 \leq y \leq 6,$$

and

$$(x + y) \leq 6.$$

The halide solid electrolyte may be a compound containing Li, M2, O (oxygen), and X2. The element M2 contains, for example, at least one selected from the group consisting of Nb and Ta. Moreover, X2 is at least one selected from the group consisting of F, Cl, Br, and I.

The compound containing Li, M2, X2, and O (oxygen) may be represented, for example, by the composition formula: $Li_xM2O_yX2_{5+x-2y}$, where x may satisfy $0.1 < x < 7.0$, and y may satisfy $0.4 < y < 1.9$.

The halide solid electrolyte, can be, more specifically, for example, $Li_3Y(Cl,Br,I)_6$, $Li_{2.7}Y_{1.1}(Cl,Br,I)_6$, $Li_2Mg(F,Cl,Br,I)_4$, $Li_2Fe(F,Cl,Br,I)_4$, $Li(Al,Ga,In)(F,Cl,Br,I)_4$, $Li_3(Al,Ga,In)(F,Cl,Br,I)_6$, $Li_3(Ca,Y,Gd)(Cl,Br,I)_6$, $Li_{2.7}(Ti,Al)F_6$, $Li_{2.5}(Ti,Al)F_6$, or $Li(Ta,Nb)O(F,Cl)_4$. In the present disclosure, when an element in a formula is expressed as, for example, "(Al,Ga,In)", this expression indicates at least one element selected from the group of elements in parentheses. That is, "(Al,Ga,In)" is synonymous with "at least one selected from the group consisting of Al, Ga, and In". The same applies to other elements.

The polymer solid electrolyte can be, for example, a compound of a polymer compound and a lithium salt. The polymer compound may have an ethylene oxide structure. The polymer compound having an ethylene oxide structure can contain a large amount of a lithium salt. Accordingly, the ionic conductivity can be further enhanced. The lithium salt can be $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, $LiC(SO_2CF_3)_3$, or the like. The lithium salts may be used alone or in combination of two or more thereof.

The complex hydride solid electrolyte can be, for example, $LiBH_4$-LiI or $LiBH_4$-$P_2S_5$.

The shape of the solid electrolyte 111 is not particularly limited and may be acicular, spherical, ellipsoidal, or the like. The shape of the solid electrolyte 111 may be particulate.

When the shape of the solid electrolyte 111 is particulate (e.g., spherical), the median diameter of the solid electrolyte 111 may be 0.1 $\mu$m or more and 5 $\mu$m or less, or 0.5 $\mu$m or more and 3 $\mu$m or less. When the median diameter of the solid electrolyte 111 is 0.1 $\mu$m or more, the dispersibility of the electrode composition (slurry) used for manufacturing the electrode plate 1000 is enhanced and thus the electrode plate 1000 can have a denser structure. When the median diameter of the solid electrolyte 111 is 5 $\mu$m or less, the electrode plate 1000 has high surface smoothness and thus can have a denser structure.

The median diameter means the particle diameter at a cumulative volume equal to 50% in the volumetric particle size distribution. The volumetric particle size distribution is determined by laser diffraction scattering. The same applies to other materials below.

The specific surface area of the solid electrolyte 111 may be 0.1 $m^2$/g or more and 100 $m^2$/g or less, or 1 $m^2$/g or more and 10 $m^2$/g or less. When the specific surface area of the solid electrolyte 111 is 0.1 $m^2$/g or more and 100 $m^2$/g or less, the dispersibility of the electrode composition (slurry) used for manufacturing the electrode plate 1000 is enhanced and thus the electrode plate 1000 can have a denser structure. The specific surface area can be measured by the multipoint BET method using a gas adsorption analyzer.

The ionic conductivity of the solid electrolyte 111 may be 0.01 mS/$cm^2$ or more, 0.1 mS/$cm^2$ or more, or 1 mS/$cm^2$

or more. When the ionic conductivity of the solid electrolyte 111 is 0.01 mS/cm$^2$ or more, the output characteristics of a battery can be enhanced.

<Active Material>

The active material 112 includes a material having properties of occluding and releasing metal ions (e.g., lithium ions). The active material 112 includes, for example, a positive electrode active material or a negative electrode active material. When the electrode plate 1000 includes the active material 112, a lithium secondary battery can be manufactured using the electrode plate 1000.

The active material 112 includes, for example, as a positive electrode active material, a material having properties of occluding and releasing metal ions (e.g., lithium ions). Examples of the positive electrode active material include a transition metal oxide, a transition metal fluoride, a polyanion material, a fluorinated polyanion material, a transition metal sulfide, a transition metal oxysulfide, a transition metal oxynitride, and a lithium-containing compound thereof. Examples of lithium-containing transition metal oxides include $Li(NiCoAl)O_2$, $Li(NiCoMn)O_2$, and $LiCoO_2$. When a lithium-containing transition metal oxide is used as the positive electrode active material, for example, the manufacturing cost of the electrode plate 1000 can be reduced and the average discharge voltage of a battery can be enhanced. $Li(NiCoAl)O_2$ means that Ni, Co, and Al are contained in any ratio. $Li(NiCoMn)O_2$ means that Ni, Co, and Mn are contained in any ratio.

The median diameter of the positive electrode active material may be 0.1 $\mu$m or more and 100 $\mu$m or less, or 1 $\mu$m or more and 10 $\mu$m or less. When the median diameter of the positive electrode active material is 0.1 $\mu$m or more, the active material 112 and the solid electrolyte 111 can be well dispersed in the electrode plate 1000. Accordingly, the charge and discharge characteristics of a battery are enhanced. When the median diameter of the positive electrode active material is 100 $\mu$m or less, the lithium diffusion rate within the positive electrode active material is enhanced. Accordingly, a battery can operate at high output.

The active material 112 includes, for example, as a negative electrode active material, a material having properties of occluding and releasing metal ions (e.g., lithium ions). Examples of the negative electrode active material include a metal material, a carbon material, an oxide, a nitride, a tin compound, and a silicon compound. The metal material may be a simple substance of metal or an alloy. Examples of the metal material include lithium metal and a lithium alloy. Examples of the carbon material include natural graphite, coke, partially graphitized carbon, carbon fiber, spherical carbon, artificial graphite, and amorphous carbon. The use of silicon (Si), tin (Sn), a silicon compound, a tin compound or the like can enhance the capacity density of a battery. The use of an oxide compound containing titanium (Ti) or niobium (Nb) can enhance the safety of a battery.

The median diameter of the negative electrode active material may be 0.1 $\mu$m or more and 100 $\mu$m or less, or 1 $\mu$m or more and 10 $\mu$m or less. When the median diameter of the negative electrode active material is 0.1 $\mu$m or more, the active material 112 and the solid electrolyte 111 can be well dispersed in the electrode plate 1000. Accordingly, the charge and discharge characteristics of a battery are enhanced. When the median diameter of the negative electrode active material is 100 $\mu$m or less, the lithium diffusion rate within the negative electrode active material is enhanced. Accordingly, a battery can operate at high output.

The positive electrode active material and the negative electrode active material may be coated with a coating material to reduce the interfacial resistance between each active material and the solid electrolyte. That is, a coating layer may be provided on the surfaces of the positive electrode active material and the negative electrode active material. The coating layer is a layer that includes a coating material. The coating material used for the coating layer can be a material with low electronic conductivity. The coating material used for the coating layer can be an oxide material, an oxide solid electrolyte, a halide solid electrolyte, a sulfide solid electrolyte, or the like. The positive electrode active material and the negative electrode active material may be coated with only one coating material selected from the above-described materials. That is, as the coating layer, a coating layer formed of only one coating material selected from the above-described materials may be provided. Alternatively, two or more coating layers may be provided using two or more coating materials selected from the above-described materials.

Examples of oxide materials used as the coating material of the coating layer include $SiO_2$, $Al_2O_3$, $TiO_2$, $B_2O_3$, $Nb_2O_5$, $WO_3$, and $ZrO_2$.

The oxide solid electrolyte used as the coating material of the coating layer may be any of the previously exemplified oxide solid electrolytes. Examples of such oxide solid electrolytes include Li-Nb-O compounds, such as $LiNbO_3$, Li-B-O compounds, such as $LiBO_2$ and $Li_3BO_3$, Li-Al-O compounds, such as $LiAlO_2$, Li-Si-O compounds, such as $Li_4SiO_4$, Li-S-O compounds, such as $Li_2SO_4$, Li-Ti-O compounds, such as $Li_4Ti_5O_{12}$, Li-Zr-O compounds, such as $Li_2ZrO_3$, Li-Mo-O compounds, such as $Li_2MoO_3$, Li-V-O compounds, such as $LiV_2O_5$, and Li-W-O compounds, such as $Li_2WO_4$, and Li-P-O compounds, such as $LiPO_4$. Oxide solid electrolytes have high potential stability. Accordingly, using an oxide solid electrolyte as the coating material can further enhance the cycle characteristics of a battery.

The halide solid electrolyte used as the coating material of the coating layer may be any of the previously exemplified halide solid electrolytes. Examples of such halide solid electrolytes include Li-Y-Cl compounds, such as

LiYCl$_6$, Li-Y-Br-Cl compounds, such as LiYBr$_2$Cl$_4$, Li-Ta-O-Cl compounds, such as LiTaOCl$_4$, and Li-Ti-Al-F compounds, such as Li$_{2.7}$Ti$_{0.3}$Al$_{0.7}$F$_6$. Halide solid electrolytes have high ionic conductivity and high high-potential stability. Accordingly, using a halide solid electrolyte as the coating material can further enhance the cycle characteristics of a battery.

The sulfide solid electrolyte used as the coating material of the coating layer may be any of the previously exemplified sulfide solid electrolytes. Examples of such sulfide solid electrolytes include Li-P-S compounds, such as Li$_2$S-P$_2$S$_5$. Sulfide solid electrolytes have high ionic conductivity and low Young's modulus. Accordingly, using a sulfide solid electrolyte as the coating material can achieve uniform coating, further enhancing the cycle characteristics of a battery.

<Second Binder>

The second binder 113 can enhance the adhesion between the particles of the solid electrolyte 111 and the particles of the active material 112 in the electrode plate 1000. It is also possible to enhance the adhesion between the electrode layer 110 and the current collector 100 in the electrode plate 1000. As the second binder 113, the additional binder described in Embodiment 1 can be used.

The second binder 113 may contain a styrenic elastomer. A styrenic elastomer means an elastomer containing a repeating unit derived from styrene. A repeating unit means a molecular structure derived from a monomer and may also be referred to as a constitutional unit. Styrenic elastomers have excellent flexibility and elasticity and accordingly are suitable as a binder for the electrode plate 1000. The content of the repeating unit derived from styrene in the styrenic elastomer is not particularly limited and is, for example, 5 mass% or more and 70 mass% or less.

The styrenic elastomer may be a block copolymer that includes a first block composed of a repeating unit derived from styrene and a second block composed of a repeating unit derived from a conjugated diene. Examples of the conjugated diene include butadiene and isoprene. The repeating unit derived from the conjugated diene may be hydrogenated. That is, the repeating unit derived from the conjugated diene may or may not have an unsaturated bond such as a carbon-carbon double bond. The block copolymer may have a triblock sequence composed of two first blocks and one second block. The block copolymer may be an ABA-type triblock copolymer. In this triblock copolymer, the A block corresponds to the first block and the B block corresponds to the second block. The first block functions as a hard segment, for example. The second block functions as a soft segment, for example.

Examples of the styrenic elastomer include styrene-ethylene/butylene-styrene block copolymer (SEBS), styrene-ethylene/propylene-styrene block copolymer (SEPS), styrene-ethylene/ethylene/propylene-styrene block copolymer (SEEPS), styrene-butadiene rubber (SBR), styrene-butadiene-styrene block copolymer (SBS), styrene-isoprene-styrene block copolymer (SIS), and hydrogenated styrene-butadiene rubber (HSBR). The second binder 113 may contain, as the styrenic elastomer, an SBR or an SEBS. The second binder 113 may be a mixture including two or more selected from these. Styrenic elastomers have excellent flexibility and elasticity and accordingly are suitable as a binder for the electrode layer 110.

The styrenic elastomer may be a styrenic triblock copolymer. Examples of styrenic triblock copolymers include styrene-ethylene/butylene-styrene block copolymer (SEBS), styrene-ethylene/propylene-styrene block copolymer (SEPS), styrene-ethylene/ethylene/propylene-styrene block copolymer (SEEPS), styrene-butadiene-styrene block copolymer (SBS), and styrene-isoprene-styrene block copolymer (SIS). These styrenic triblock copolymers may be referred to as styrenic thermoplastic elastomers. These styrenic triblock copolymers tend to be flexible and have high strength.

The styrenic elastomer may contain a styrene-ethylene/butylene-styrene block copolymer (SEBS). SEBS has excellent flexibility and elasticity and has excellent filling characteristics during thermal compression, and accordingly is particularly suitable as a binder for the electrode layer 110.

The styrenic elastomer may contain a modifying group. A modifying group means a functional group that chemically modifies all of the repeating units contained in a polymer chain, a portion of the repeating units contained in the polymer chain, or a terminal portion of the polymer chain. The modifying group can be introduced into the polymer chain through a substitution reaction, an addition reaction, or the like. The modifying group contains, for example, an element having relatively high electronegativity, such as O, N, S, F, Cl, Br, or F, or having relatively low electronegativity, such as Si, Sn, or P. The modifying group containing such an element can impart polarity to the polymer. Examples of the modifying group include a carboxylic acid group, an acid anhydride group, an acyl group, a hydroxy group, a sulfo group, a sulfanyl group, a phosphate group, a phosphonate group, an isocyanate group, an epoxy group, a silyl group, an amino group, a nitrile group, and a nitro group. A specific example of acid anhydride groups is a maleic anhydride group. The modifying group may be a functional group that can be introduced through a reaction with a modifying agent derived from any of the following compounds. Examples of the compound of the modifying agent include an epoxy compound, an ether compound, an ester compound, an isocyanate compound, an isothiocyanate compound, an isocyanuric acid derivative, a nitrogen-containing carbonyl compound, a nitrogen-containing vinyl compound, a nitrogen-containing epoxy compound, a mercapto group derivative, a thiocarbonyl compound, a halogenated silicon compound, an epoxidized silicon compound, a vinylated silicon compound, an alkoxy silicon compound, a nitrogen-containing alkoxy silicon compound, a halogenated tin compound, an organotin carboxylate compound, a phosphite ester compound, and a phosphino compound. When the styrenic elastomer in the second binder 113 contains any of the above modifying groups, the interaction with the current collector 100 can enhance the peel strength between the electrode layer 110 and the current collector 100.

The styrenic elastomer may contain a modifying group containing a nitrogen atom. A modifying group containing a nitrogen atom is a nitrogen-containing functional group, examples of which include an amino group, such as that in an amine compound. The position of the modifying group may be at a polymer chain terminal. The styrenic elastomer may be, for example, a terminal amine-modified styrenic elastomer. The styrenic elastomer may be, for example, a styrenic elastomer having a nitrogen atom at at least one terminal of a polymer chain and having a star polymer structure centered on a nitrogen-containing alkoxysilane substituent.

The weight-average molecular weight ($M_w$) of the styrenic elastomer may be 200,000 or more. The weight-average molecular weight of the styrenic elastomer may be 300,000 or more, 500,000 or more, 800,000 or more, or 1,000,000 or more. The upper limit value of the weight-average molecular weight is, for example, 1,500,000. When the weight-average molecular weight of the styrenic elastomer is 200,000 or more, the particles of the solid electrolyte 111 and the particles of the active material 112 can adhere to each other with sufficient adhesive strength. When the weight-average molecular weight of the styrenic elastomer is 1,500,000 or less, ionic conduction between the particles of the solid electrolyte 111 is less likely to be hindered by the second binder 113, enabling an enhancement in the output characteristics of a battery. The weight-average molecular weight of the styrenic elastomer can be determined, for example, by gel permeation chromatography (GPC) measurement using polystyrene as a standard sample. In other words, the weight-average molecular weight is a value converted to polystyrene equivalent. In the GPC measurement, chloroform may be used as an eluent. When two or more peak tops are observed in the chart obtained by the GPC measurement, the weight-average molecular weight calculated from the entire peak range including the peak tops can be defined as the weight-average molecular weight of the styrenic elastomer.

In the styrenic elastomer, the ratio of the degree of polymerization m of the repeating unit derived from styrene to the degree of polymerization n of a repeating unit derived from other than styrene is defined as m:n. In this case, the mole fraction ($\varphi$) of the repeating unit derived from styrene in the styrenic elastomer can be calculated by $\varphi = m/(m + n)$. The mole fraction ($\varphi$) of the repeating unit derived from styrene in the styrenic elastomer can be determined, for example, by proton nuclear magnetic resonance ($^1$H-NMR) measurement.

The mole fraction ($\varphi$) of the repeating unit derived from styrene in the styrenic elastomer may be 0.02 or more and 0.55 or less, or 0.1 or more and 0.3 or less. When the mole fraction ($\varphi$) in the styrenic elastomer is 0.02 or more, the strength of the electrode layer 110 can be enhanced. When the mole fraction ($\varphi$) in the styrenic elastomer is 0.55 or less, the flexibility of the electrode layer 110 can be enhanced.

The second binder 113 may include a binder other than the styrenic elastomer. Alternatively, the second binder 113 may be the styrenic elastomer. In other words, the second binder 113 may include only the styrenic elastomer.

<Electrode Layer>

The electrode layer 110 includes the second binder 113. The electrode layer 110 may further include the solid electrolyte 111, the active material 112, or both of these. According to this configuration, while sufficient strength of the electrode layer 110 is maintained, the ionic conductivity within the electrode layer 110 is enhanced, enabling high-output operation of a battery.

The median diameter of the solid electrolyte 111 included in the electrode layer 110 may be smaller than the median diameter of the active material 112. Accordingly, the solid electrolyte 111 and the active material 112 can be well dispersed.

In the electrode layer 110, the volume ratio "v1:100 - v1" between the active material 112 and the solid electrolyte 111 may satisfy $30 \leq v1 \leq 95$, where v1 represents the volume ratio of the active material 112 when the sum of the volumes of the active material 112 and the solid electrolyte 111 included in the electrode layer 110 is taken as 100. When $30 \leq v1$ is satisfied, sufficient energy density of a battery can be easily ensured. When $v1 \leq 95$ is satisfied, high-output operation of a battery can be more easily performed.

The thickness of the electrode layer 110 may be 10 $\mu$m or more and 500 $\mu$m or less. When the thickness of the electrode layer 110 is 10 $\mu$m or more, sufficient energy density of a battery can be easily ensured. When the thickness of the electrode layer 110 is 500 $\mu$m or less, high-output operation of a battery can be more easily performed.

In the electrode layer 110, the ratio of the second binder 113 to the solid electrolyte 111 may be 0.1 mass% or more and 10 mass% or less, 0.5 mass% or more and 8 mass% or less, or 1 mass% or more and 5 mass% or less. When the ratio of the second binder 113 to the solid electrolyte 111 is 0.1 mass% or more, the second binder 113 tends to bind a greater number of particles of the solid electrolyte 111 together. Accordingly, the film strength of the electrode layer 110 can be enhanced. When the ratio of the second binder 113 to the solid electrolyte 111 is 10 mass% or less, the contact between the particles of the solid electrolyte 111 in the electrode layer 110 tends to be enhanced. Accordingly, the ionic conductivity of the electrode layer 110 can be enhanced.

In the electrode layer 110, the ratio of the second binder 113 to the active material 112 may be 0.03 mass% or more and 4 mass% or less, 0.15 mass% or more and 2 mass% or less, or 0.3 mass% or more and 1 mass% or less. When the ratio of the second binder 113 to the active material 112 is 0.03 mass% or more, the second binder 113 tends to bind a greater number of particles of the active material 112 together. Accordingly, the film strength of the electrode layer 110 can be enhanced. When the ratio of the second binder 113 to the active material 112 is 4 mass% or less, the contact between the particles of the active material 112 in the electrode layer 110 tends to enhance. Accordingly, the output characteristics of a battery can be enhanced.

The electrode layer 110 may further contain a conductive additive for the purpose of enhancing electronic conductivity. Examples of the conductive additive include graphite, such as natural graphite or artificial graphite, carbon black, such as acetylene black or Ketjenblack, a conductive fiber, such as a carbon fiber or a metal fiber, fluorinated carbon, a conductive powder, such as aluminum powder, a conductive whisker, such as a zinc oxide whisker or a potassium titanate whisker, a conductive metal oxide, such as titanium oxide, and a conductive polymer, such as polyaniline, polypyrrole, or polythiophene. The use of carbon materials as the conductive additive can achieve cost reduction.

The electrode layer 110 may contain a dispersant for the purpose of enhancing the dispersibility of the solid electrolyte 111 and the active material 112. The dispersant may be a low-molecular-weight dispersant or a high-molecular-weight dispersant. As the dispersant, a commercially available dispersant, wetting agent, or surfactant may be used, for example.

In the electrode layer 110, the dispersant may contain an amine compound. Amine compounds are suitable for enhancing the dispersibility of the solid electrolyte 111. Examples of the amine compound include an aliphatic amine, such as methylamine or dimethylamine, an aromatic amine, such as aniline, and a heterocyclic amine, such as imidazole or imidazoline.

In the electrode layer 110, the dispersant may contain imidazoline or an imidazoline derivative. Imidazoline or imidazoline derivatives are more suitable for enhancing the dispersibility of the solid electrolyte 111. Examples of the imidazoline derivative include 1-hydroxyethyl-2-alkenylimidazoline.

In the electrode layer 110, the ratio of the mass of the dispersant to the mass of the solid electrolyte 111 is not particularly limited and is, for example, 0.001 mass% or more and 10 mass% or less, and may be 0.01 mass% or more and 1.0 mass% or less. When the ratio of the mass of the dispersant is 0.001 mass% or more, the dispersibility of the solid electrolyte 111 in the electrode layer 110 can be enhanced. When the ratio of the mass of the dispersant is 10 mass% or less, a decrease in the ionic conductivity of the solid electrolyte 111 can be suppressed.

[Manufacturing Method for Electrode Plate]

The electrode plate 1000 can be fabricated, for example, by the following method. First, an electrode composition for forming the electrode layer 110 is prepared in which the solid electrolyte 111, the active material 112, and the second binder 113 are included. The electrode composition may be a slurry in which the solid electrolyte 111, the active material 112, and the second binder 113 are dispersed in a solvent. The solvent can be a solvent that does not react with the solid electrolyte 111, for example, an aromatic hydrocarbon solvent, such as tetralin. Subsequently, the electrode composition is applied onto the coating layer 102 of the current collector 100. Examples of methods for applying the electrode composition include die coating, gravure coating, doctor blading, bar coating, spray coating, and electrostatic coating. The resulting coating film is dried and thus the electrode layer 110 is formed, and the electrode plate 1000 can be obtained. The drying method for the coating film is not particularly limited. For example, the coating film may be dried by heating the coating film at a set temperature of 80°C or more and 150°C or less using warm air or hot air drying. A method of applying the electrode composition onto the coating layer 102 to fabricate the electrode layer 110 may be referred to as wet coating.

(Embodiment 3)

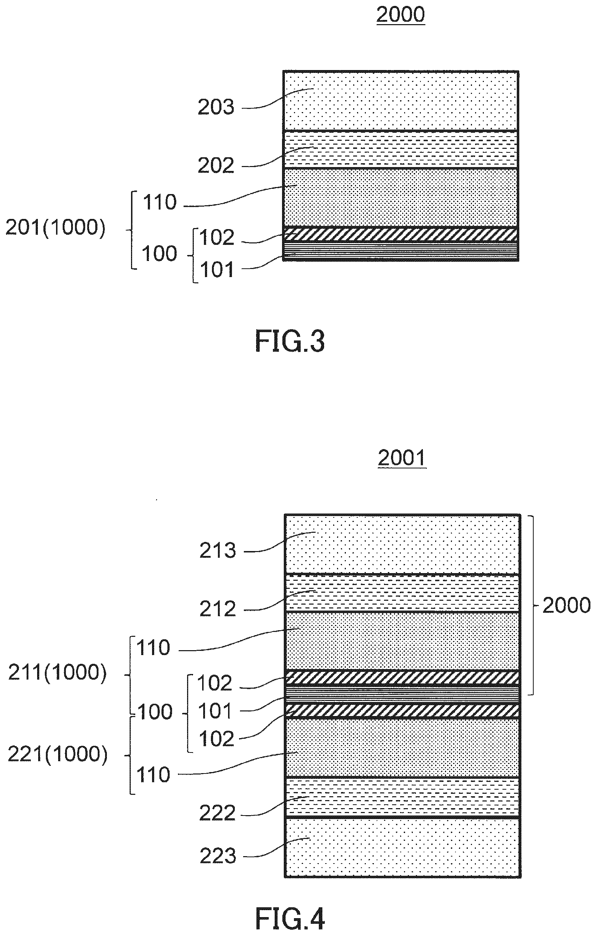

FIG. 3 is a cross-sectional view of a battery 2000 according to Embodiment 3. The battery 2000 includes a negative electrode 201, a positive electrode 203, and an electrolyte layer 202.

At least one selected from the group consisting of the negative electrode 201 and the positive electrode 203 includes the electrode plate 1000 according to Embodiment 2. That is, at least one selected from the group consisting of the negative electrode 201 and the positive electrode 203 includes the electrode layer 110 and the current collector 100.

The electrolyte layer 202 is positioned between the negative electrode 201 and the positive electrode 203.

According to the above configuration, the output characteristics of the battery 2000 of Embodiment 3 can be enhanced.

As shown in FIG. 3, in the battery 2000, the negative electrode 201 may be the electrode plate 1000 according to Embodiment 2. In this case, the negative electrode 201 includes the electrode layer 110 and the current collector 100 described in Embodiment 2. In the following, the battery 2000 in which the negative electrode 201 is the electrode plate 1000 is described. However, the battery 2000 is not limited to the following embodiment. In the battery 2000, the positive electrode 203 may be the electrode plate 1000 according to Embodiment 2 described above.

According to the above configuration, the output characteristics of the battery 2000 can be further enhanced.

The electrolyte layer 202 is a layer that includes an electrolyte material. Examples of the electrolyte material include a solid electrolyte. That is, the electrolyte layer 202 may be a solid electrolyte layer. The solid electrolyte included in the electrolyte layer 202 may be any of the solid electrolytes exemplified as the solid electrolyte 111 and can be, for example, a sulfide solid electrolyte, an oxide solid electrolyte, a halide solid electrolyte, a polymer solid electrolyte, or a complex hydride solid electrolyte.

The electrolyte layer 202 may contain the solid electrolyte as a main component. The electrolyte layer 202 may contain the solid electrolyte in a mass proportion of 70% or more (70 mass% or more) in the entire electrolyte layer 202.

According to the above configuration, the charge and discharge characteristics of the battery 2000 can be enhanced.

The electrolyte layer 202 may contain the solid electrolyte as a main component and further contain an unavoidable impurity, or a starting material for use in synthesizing the solid electrolyte, a by-product, a decomposition product, or the like.

The electrolyte layer 202 may contain the solid electrolyte in a mass proportion of 100% (100 mass%) in the entire electrolyte layer 202, except for an unavoidably incorporated impurity.

According to the above configuration, the charge and discharge characteristics of the battery 2000 can be further enhanced.

The electrolyte layer 202 may include two or more of the materials exemplified as the solid electrolyte. For example, the electrolyte layer 202 may include a halide solid electrolyte and a sulfide solid electrolyte.

The thickness of the electrolyte layer 202 may be 1 $\mu$m or more and 300 $\mu$m or less. When the thickness of the electrolyte layer 202 is 1 $\mu$m or more, the likelihood of a short circuit between the negative electrode 201 and the positive electrode 203 is reduced. When the thickness of the electrolyte layer 202 is 300 $\mu$m or less, high-output operation of the battery 2000 can be easily performed. That is, by appropriately adjusting the thickness of the electrolyte layer 202, the safety of the battery 2000 can be sufficiently ensured and the battery 2000 can be operated at high output.

The shape of the solid electrolyte included in the battery 2000 is not particularly limited. The shape of the solid electrolyte may be acicular, spherical, ellipsoidal, or the like. The shape of the solid electrolyte may be particulate.

The positive electrode 203 may include an electrolyte material and may include, for example, a solid electrolyte. The solid electrolyte can be any of the solid electrolytes exemplified as the material constituting the electrolyte layer 202. According to the above configuration, ionic conductivity (e.g., lithium-ion conductivity) within the positive electrode 203 is enhanced, enabling high-output operation of the battery 2000.

The positive electrode 203 includes, for example, as a positive electrode active material, a material having properties of occluding and releasing metal ions (e.g., lithium ions). The positive electrode active material may be any of the materials exemplified in Embodiment 2.

The median diameter of the positive electrode active material may be 0.1 $\mu$m or more and 100 $\mu$m or less. When the median diameter of the positive electrode active material is 0.1 $\mu$m or more, the positive electrode active material and the solid electrolyte can be well dispersed in the positive electrode 203. Accordingly, the charge and discharge characteristics of the battery 2000 are enhanced. When the median diameter of the positive electrode active material is 100 $\mu$m or less, the lithium diffusion rate within the positive electrode active material is enhanced. Accordingly, the battery 2000 can operate at high output.

The median diameter of the positive electrode active material may be larger than the median diameter of the solid electrolyte. Accordingly, the solid electrolyte and the positive electrode active material can be well dispersed.

In the positive electrode 203, the volume ratio "v2:100 - v2" between the positive electrode active material and the solid electrolyte may satisfy $30 \leq v2 \leq 95$, where v2 represents the volume ratio of the positive electrode active material when the sum of the volumes of the positive electrode active material and the solid electrolyte included in the positive electrode 203 is taken as 100. When $30 \leq v2$ is satisfied, sufficient energy density of the battery 2000 can be easily ensured. When $v2 \leq 95$ is satisfied, high-output operation of the battery 2000 can be more easily performed.

The thickness of the positive electrode 203 may be 10 $\mu$m or more and 500 $\mu$m or less. When the thickness of the positive electrode 203 is 10 $\mu$m or more, sufficient energy density of the battery 2000 can be easily ensured. When the thickness of the positive electrode 203 is 500 $\mu$m or less, high-output operation of the battery 2000 can be more easily performed.

The positive electrode active material may be coated with a coating material to reduce the interfacial resistance with the solid electrolyte. The coating material can be a material with low electronic conductivity. The coating material can be an oxide material, an oxide solid electrolyte, or the like. The coating material may be any of the materials exemplified in Embodiment 2.

At least one selected from the group consisting of the electrolyte layer 202 and the positive electrode 203 may contain a binder for the purpose of enhancing adhesion between the particles. The binder can be any of the materials exemplified in Embodiment 2. One binder may be used alone, or two or more binders may be used in combination.

The binder may be an elastomer for its excellent binding properties. An elastomer means a polymer with elasticity. The elastomer used as the binder may be a thermoplastic elastomer or a thermosetting elastomer. The binder may contain a thermoplastic elastomer. The elastomer can be any of the materials exemplified in Embodiment 2. When the binder contains an elastomer, high loading in the electrolyte layer 202 or the positive electrode 203 can be achieved, for example, through thermal compression during the manufacture of the battery 2000.

At least one selected from the group consisting of the electrode layer 110 of the negative electrode 201, the electrolyte layer 202, and the positive electrode 203 may contain a nonaqueous electrolyte solution, a gel electrolyte, or an ionic liquid for the purpose of facilitating the transfer of lithium ions and enhancing the output characteristics of the battery 2000.

The nonaqueous electrolyte solution contains a nonaqueous solvent and a lithium salt dissolved in the nonaqueous solvent. The nonaqueous solvent can be a cyclic carbonate solvent, a chain carbonate solvent, a cyclic ether solvent, a chain ether solvent, a cyclic ester solvent, a chain ester solvent, a fluorinated solvent, or the like. Examples of cyclic carbonate solvents include ethylene carbonate, propylene carbonate, and butylene carbonate. Examples of chain carbonate solvents include dimethyl carbonate, ethyl methyl carbonate, and diethyl carbonate. Examples of cyclic ether solvents include tetrahydrofuran, 1,4-dioxane, and 1,3-dioxolane. Examples of chain ether solvents include 1,2-dimethoxyethane and 1,2-diethoxyethane. Examples of cyclic ester solvents include $\gamma$-butyrolactone. Examples of chain ester solvents include methyl acetate. Examples of fluorinated solvents include fluoroethylene carbonate, methyl fluoropropionate, fluorobenzene, fluoroethylmethyl carbonate, and fluorodimethylene carbonate. As the nonaqueous solvent, one nonaqueous solvent selected from these may be used alone, or a mixture of two or more nonaqueous solvents selected from these may be used.

The nonaqueous electrolyte solution may contain at least one fluorinated solvent selected from the group consisting of fluoroethylene carbonate, methyl fluoropropionate, fluorobenzene, fluoroethylmethyl carbonate, and fluorodimethylene carbonate.

Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these may be used alone, or a mixture of two or more lithium salts selected from these may be used. The concentration of the lithium salt in the nonaqueous electrolyte solution may be 0.5 mol/liter or more and 2 mol/liter or less.

The gel electrolyte can be a material obtained by impregnating a polymer material with a nonaqueous electrolyte solution. Examples of the polymer material include polyethylene oxide, polyacrylonitrile, polyvinylidene fluoride, polymethyl methacrylate, and a polymer having an ethylene oxide bond.

A cation constituting the ionic liquid may be an aliphatic chain quaternary cation, such as tetraalkylammonium or tetraalkylphosphonium, an aliphatic cyclic ammonium, such as pyrrolidinium, morpholinium, imidazolinium, tetrahydropyrimidinium, piperazinium, or piperidinium, a nitrogen-containing heterocyclic aromatic cation, such as pyridinium or imidazolium, or the like. An anion constituting the ionic liquid may be $PF_6^-$, $BF_4^-$, $SbF_6^-$, $AsF_6^-$, $SO_3CF_3^-$, $N(SO_2F)_2^-$, $N(SO_2CF_3)_2^-$, $N(SO_2C_2F_5)_2^-$, $N(SO_2CF_3)(SO_2C_4F_9)^-$, $C(SO_2CF_3)_3^-$, or the like. The ionic liquid may contain a lithium salt.

At least one selected from the group consisting of the electrode layer 110 of the negative electrode 201 and the positive electrode 203 may contain a conductive additive for the purpose of enhancing electronic conductivity. The conductive additive can be any of the materials exemplified in Embodiment 2.

At least one selected from the group consisting of the electrode layer 110 of the negative electrode 201 and the positive electrode 203 may contain a dispersant for the purpose of enhancing the dispersibility of the solid electrolytes and the active materials. The dispersant can be any of the materials exemplified in Embodiment 2.

Examples of the shape of the battery 2000 include a coin type, a cylindrical type, a prismatic type, a sheet type, a button type, a flat type, and a stacked type.

The battery 2000 can be manufactured, for example, by the following method. First, the current collector 100, materials for forming the electrode layer 110, materials for forming the electrolyte layer 202, materials for forming the positive electrode 203, and a current collector for the positive electrode 203 are each prepared. These are used to fabricate a stack in which the negative electrode 201, the electrolyte layer 202, and the positive electrode 203 are disposed in this order, by a known method. Thus, the battery 2000 can be manufactured.

FIG. 4 is a cross-sectional view of a battery 2001 according to a modification. The battery 2001 can be a stack of a plurality of the batteries 2000. The battery 2001 may be manufactured by the following method. A negative electrode (first negative electrode 211) in which the electrode layer 110 is stacked on the current collector 100 including the substrate 101 with the coating layer 102 disposed on both surfaces thereof, a first electrolyte layer 212, and a first positive electrode 213 are disposed in this order. On the other hand, on the opposite surface of the current collector 100 to the surface on which the first negative electrode 211 is stacked, the electrode layer 110 (second negative electrode 221), a second electrolyte layer 222, and a second positive electrode 223 are disposed in this order. Thus, a stack is obtained in which the first positive electrode 213, the first electrolyte layer 212, the first negative electrode 211, the current collector 100, the second negative electrode 221, the second electrolyte layer 222, and the second positive electrode 223 are disposed in this order. This stack may be pressure-formed at a high temperature, for example, at a temperature of 120°C or more and 195°C or less, using a press machine to manufacture the battery 2001. According to such a method, it is possible to fabricate a stack of two batteries 2000 while suppressing battery warpage, enabling more efficient manufacturing of the high-output battery 2001. In fabricating the battery 2001, the order of stacking the members is not particularly limited. For example, after the first negative electrode 211 and the second negative electrode 221 are disposed on the current collector 100, the first electrolyte layer 212, the second electrolyte layer 222, the first positive electrode 213, and the second positive electrode 223 may be stacked in this order to fabricate a stack of two batteries 2000. Furthermore, a plurality of the batteries 2001 and a plurality of positive electrode current collectors may be prepared and the battery 2001 and the positive electrode current collector may be alternately stacked to manufacture a stack of the battery 2000. Such a method enables the battery 2000 to be stacked with high efficiency.

(Other Embodiments)

(Supplementary Description)

The above description of the embodiments discloses the following techniques.

(Technique 1)

A current collector including:

a substrate; and
a coating layer coating the substrate, wherein
the coating layer includes conductive carbon and a first binder,
the first binder includes an aromatic super engineering plastic, and
a moisture content calculated based on moisture generated from the current collector when heated to 200°C is 200 mass ppm or less.

According to such a configuration, it is possible to achieve both the productivity of electrochemical devices and the high-temperature characteristics of electrochemical devices.

(Technique 2)

The current collector according to Technique 1, wherein a tensile strength of the current collector is 120 N/mm$^2$ or more. According to such a configuration, even under high-temperature compression of a member including the current collector, breakage of the current collector is suppressed, enabling a further enhancement in the productivity of electrochemical devices.

(Technique 3)

The current collector according to Technique 1 or 2, wherein the aromatic super engineering plastic includes at least one selected from the group consisting of a polyimide and a polyethersulfone. Polyimides and polyethersulfones tend to exhibit higher heat resistance. Accordingly, using at least one selected from the group consisting of a polyimide and a polyethersulfone enhances the effect of suppressing the adhesion of the coating layer to the production equipment.

(Technique 4)

The current collector according to Technique 3, wherein a degree of imidization of the polyimide is 90% or more. According to such a configuration, it is possible to reduce the moisture content of the current collector.

(Technique 5)

The current collector according to any one of Techniques 1 to 4, wherein the substrate includes aluminum or an aluminum alloy. According to such a configuration, it is possible to not only enhance the peel strength between the electrode layer and the current collector but also enhance the gravimetric energy density of electrochemical devices.

(Technique 6)

The current collector according to any one of Techniques 1 to 5, wherein the moisture content is 100 mass ppm or less. According to such a configuration, it is easy to achieve both the productivity of electrochemical devices and the high-temperature characteristics of electrochemical devices.

(Technique 7)

An electrode plate including:

the current collector according to any one of Techniques 1 to 6; and
an electrode layer including a second binder, the electrode layer being disposed on the current collector.

According to such a configuration, it is possible to achieve both the productivity of electrochemical devices and the high-temperature characteristics of electrochemical devices.

(Technique 8)

The electrode plate according to Technique 7, wherein the second binder includes a styrenic elastomer. Styrenic elastomers have excellent flexibility and elasticity and accordingly are suitable as a binder for the electrode layer. Furthermore, the peel strength between the electrode layer and the current collector can be enhanced.

(Technique 9)

The electrode plate according to Technique 7 or 8, wherein the electrode layer further includes a solid electrolyte. The electrode plate of the present disclosure is suitable for an electrochemical device, particularly a battery, in which an electrode layer includes a solid electrolyte.

(Technique 10)

The electrode plate according to Technique 9, wherein the solid electrolyte includes a sulfide solid electrolyte. Sulfide solid electrolytes have more excellent ionic conductivity and formability, and accordingly are particularly suitable as the solid electrolyte of the electrode layer.

(Technique 11)

A battery including:

a positive electrode;
a negative electrode; and
an electrolyte layer positioned between the positive electrode and the negative electrode, wherein
at least one selected from the group consisting of the positive electrode and the negative electrode includes the electrode plate according to any one of Techniques 7 to 10.

According to such a configuration, it is possible to provide a battery that achieves both productivity and high-temperature cycle characteristics. Such a battery also has excellent output characteristics.

Examples

The details of the present disclosure are described below using examples and comparative examples. The current collector, electrode plate, and battery of the present disclosure are not limited to the following examples.

<Example 1-1>

[Fabrication of Current Collector]

Conductive carbon, the first binder, and a solvent were kneaded to prepare a coating composition. As the conductive carbon, carbon black and graphite were used. As the first binder, a soluble polyimide (PI) was used. Subsequently, the coating composition was applied to one surface of an aluminum alloy foil (A3003 foil, thickness: 15 $\mu$m) to form a coating film. The coating film was dried at 165°C to form a coating layer. Furthermore, the coating composition was applied to the other surface of the aluminum alloy foil to form a coating film. The coating film was dried at 165°C to form a coating layer. Thus, a current collector having a coating layer on both surfaces thereof was fabricated. Each coating layer had a mass per unit area of 1.3 g/m$^2$. The current collector was then allowed to stand in an argon glove box with a dew point of -60°C or less for one week or more to adjust the moisture content of the current collector. Thus, the current collector of Example 1-1 was obtained.

<Example 1-2>

The current collector of Example 1-2 was fabricated in the same manner as in Example 1-1, except that a polyethersulfone (PES) was used as the first binder. In the current collector of Example 1-2, each coating layer had a mass per unit area of 1.3 g/m$^2$.

<Comparative Example 1-1>

The current collector of Comparative Example 1-1 was fabricated in the same manner as in Example 1-1, except that polyvinylidene fluoride (PVDF) was used as the first binder. In the current collector of Comparative Example 1-1, each coating layer had a mass per unit area of 0.94 g/m$^2$.

<Comparative Example 1-2>

The current collector of Comparative Example 1-2 was fabricated in the same manner as in Example 1-1, except that polyimide varnish was used as the first binder. In the current collector of Comparative Example 1-2, each coating layer had a mass per unit area of 0.64 g/m$^2$. Polyimide varnish is a polyamic acid solution, which is a precursor of a polyimide. In Comparative Example 1-2, an imidization reaction occurs when the coating composition is applied to the aluminum alloy foil and heated.

[Measurement of Moisture Content by the Karl Fischer Method]

The current collectors of the examples and comparative examples were subjected to moisture content measurement by the Karl Fischer method in the following manner.
The moisture content measurement was performed in the following manner using a moisture vaporizer (VA-300, manufactured by Nittoseiko Analytech Co., Ltd.) and a moisture meter (CA-310, manufactured by Nittoseiko Analytech Co., Ltd.) that were installed in a dry room with a dew point of -40°C or less. The moisture content of a 120 mm × 150 mm cut piece of the current collector at 100°C was measured by coulometric titration under a nitrogen gas flow at 250 ml/min. Subsequently, the temperature of the current collector was increased and the moisture content at each temperature of 125°C, 150°C, 175°C, 200°C, 225°C, 250°C, 275°C, and 300°C was measured. The cumulative moisture content (μg) to 200°C and the cumulative moisture content (μg) to 300°C were determined, and the ratio (μg/g = mass ppm) of each cumulative moisture content to the mass (g) of the current collector was calculated as the moisture content (rate).

[Measurement of Tensile Strength]

The current collectors of the examples and comparative examples were subjected to tensile strength measurement in the following manner.
The tensile strength measurement was performed in the following manner under ambient air and room temperature conditions using a force-displacement measurement unit (FSA-0.5K-500N, manufactured by IMADA Co., Ltd.). A 10-mm-wide cut piece of the current collector was stretched at a speed of 20 mm/min. The force (unit: N) applied during the stretching was continuously recorded until the current collector broke, and the maximum force was determined. The value obtained by dividing the maximum force by the cross-sectional area (mm$^2$) of the current collector was defined as the tensile strength of the current collector (unit: N/mm$^2$).

[Evaluation of Productivity]

For the examples and comparative examples, battery productivity was evaluated by simulating the high-temperature compression process in battery manufacturing in the following manner.
The following operations were performed in an argon glove box with a dew point of -60°C or less. A 90 mm × 150 mm cut piece of the current collector was sandwiched between two SUS foils having a thickness of 10 μm to obtain a test specimen. The test specimen was pressed under conditions of a linear pressure of 3.6 t/cm and a speed of 0.2 m/min using a roll press machine heated to 180°C. The presence or absence of the adhesion between the current collector and the SUS foils after the high-temperature pressing was visually inspected. In Table 1, a circle (∘) indicates the absence of the adhesion and good productivity, whereas a cross (×) indicates the presence of the adhesion and poor productivity.

[Evaluation of High-Temperature Cycle Characteristics]

The current collectors of the examples and comparative examples were used to fabricate batteries and the high-temperature cycle characteristics were evaluated.

[Fabrication of Battery]

In a dry room with a dew point of -50°C or less, a negative electrode active material layer was formed on a nickel foil (thickness of 15 μm) using a die coater. The negative electrode active material layer was composed of $Li_4Ti_5O_{12}$ (LTO), a $Li_2S-P_2S_5$-based glass ceramic (LPS), a solution polymerized styrene-butadiene rubber (modified SBR, Asaprene Y031, manufactured by Asahi Kasei Corporation), a dispersant (1-hydroxyethyl-2-alkenylimidazoline, DISPERBYK-109, manufactured by BYK Corporation), and vapor-grown carbon fiber (VGCF-H, manufactured by Showa Denko K.K.). Subsequently, an electrolyte layer composed of LPS, a modified SBR, and a dispersant was formed on the negative electrode. Subsequently, a positive electrode active material layer composed of $LiNbO_3$-coated lithium nickel cobalt aluminum oxide (NCA), LPS, a modified SBR, vapor-grown carbon fiber, acetylene black (DENKA BLACK Li, Li-435, manufactured by Denka Company Limited), and a dispersant was formed on the electrolyte. Thus, a stack was fabricated in which the nickel foil (negative electrode current collector), the negative electrode active material layer, the electrolyte layer, and the positive electrode active material layer were included in this order.

In an argon glove box with a dew point of -60°C or less, the stack was cut into a 20 mm x 20 mm square piece. Subsequently, the stack, the current collector (positive electrode current collector) of the example or comparative example, and a silicone rubber film were stacked in this order inside a mold to fabricate an electrode plate. The electrode plate was pressure-molded at 160°C under a pressure of 580 MPa. The silicone rubber film was removed, and the peripheral edge portions of the electrode plate were cut off using a die cutter. A copper foil with tab leads was attached to each of the negative electrode current collector and the positive electrode current collector. The electrode plate was vacuum-sealed inside a container made of an aluminum-laminated film to fabricate a battery.

[Charge and Discharge Test]

A metal plate, the battery, a silicon rubber sheet, and a metal plate were stacked in this order, and a single bolt was tightened to a torque of 2 N•m to constrain the battery under a pressure of approximately 1 MPa, followed by placement in a thermostatic chamber set at 25°C. Subsequently, a constant-current charge was performed at a current value equivalent to a 0.1C rate relative to the actual capacity of the positive electrode active material (lithium nickel cobalt aluminum oxide) to a voltage of 2.7 V. Thereafter, a constant-voltage charge was performed at a voltage of 2.7 V, and the charge was terminated at a current value equivalent to a 0.01 C rate. Thereafter, a constant-current discharge was performed at a 0.1C rate to a voltage of 1.5 V, and then a constant-voltage discharge was performed at a voltage of 1.5 V to a 0.01C rate. Subsequently, a constant-current charge was performed at a 0.333C rate to a voltage of 2.7 V, and then a constant-current charge was performed at a 0.01C rate to a voltage of 2.7 V. Subsequently, a constant-current discharge was performed at a 0.333C rate to a voltage of 1.5 V, and then a constant-current discharge was performed at a 0.01C rate to a voltage of 1.5 V. The temperature of the thermostatic chamber was then changed to 80°C, and a high-temperature cycle test was performed under the following conditions. First, a constant-current charge was performed at a 5C rate to a voltage of 2.7 V, and then a constant-voltage charge was performed at a voltage of 2.7 V to a 0.33C rate. Subsequently, a constant-current discharge was performed at a 1C rate to a voltage of 1.82 V. The discharge capacity measured at this stage was defined as the initial discharge capacity. The above charge and discharge at high temperatures were repeated 20 times. The ratio of the discharge capacity at the 20th cycle to the initial discharge capacity is defined as the discharge capacity retention ratio. The results are shown in Table 1.

[Table 1]

| | First binder | Moisture content when heating to 200°C (mass ppm) | Moisture content when heating to 300°C (mass ppm) | Tensile strength (N/mm²) | Mass productivity | Discharge capacity retention ratio (%) |
|---|---|---|---|---|---|---|
| Example 1-1 | Polyimide | 70 | 112 | 292 | ○ | 96.7 |
| Example 1-2 | Polyethersulfone | 52 | 83 | 282 | ○ | 95.5 |

(continued)

|  | First binder | Moisture content when heating to 200°C (mass ppm) | Moisture content when heating to 300°C (mass ppm) | Tensile strength (N/mm$^2$) | Mass productivity | Discharge capacity retention ratio (%) |
|---|---|---|---|---|---|---|
| Comparative Example 1-1 | Polyvinylidene fluoride | 53 | 167 | 292 | × | 97.1 |
| Comparative Example 1-2 | Polyimide | 225 | 415 | 271 | ○ | 94.1 |

As shown in Table 1, the battery using the current collector of Comparative Example 1-1 exhibited a high discharge capacity retention ratio; however, owing to the use of polyvinylidene fluoride as the first binder of the coating layer, the current collector adhered to the SUS foils when subjected to high-temperature pressing.

In the current collector of Comparative Example 1-2, owing to the use of a polyimide as the first binder of the coating layer, the current collector did not adhere to the SUS foils when subjected to high-temperature pressing. In Comparative Example 1-2, however, owing to the use of a polyimide derived from polyimide varnish as the first binder, the moisture content measured when heating to 200°C greatly exceeded 200 mass ppm. Consequently, the battery using the current collector of Comparative Example 1-2 exhibited a low discharge capacity retention ratio.

In contrast, in the current collectors of Example 1-1 and Example 1-2, an aromatic super engineering plastic was contained as the first binder of the coating layer and the moisture content measured when heating to 200°C was 200 mass ppm or less. The current collectors of Example 1-1 and Example 1-2 did not adhere to the SUS foils even when subjected to high-temperature pressing, and exhibited good productivity. The batteries using the current collectors of Example 1-1 and Example 1-2 exhibited more excellent discharge capacity retention ratios compared to the discharge capacity retention ratio of the battery using the current collector of Comparative Example 1-2. That is, according to Example 1-1 and Example 1-2, current collectors with improved productivity and high-temperature cycle characteristics were obtained.

[Measurement of Degree of Imidization]

The degree of imidization of the polyimide contained in the coating layers of the current collectors of Example 1-1 and Comparative Example 1-2 was measured by the previously described method. Consequently, the degree of imidization of the polyimide contained in the coating layer of the current collector of Example 1-1 was 100%. The degree of imidization of the polyimide contained in the coating layer of the current collector of Comparative Example 1-2 was 82%. Additionally, a reference sample was prepared by completely imidizing a current collector through heat treatment at 350°C for 6 hours in a vacuum atmosphere.

<Example 2-1>

[Fabrication of Electrode Plate]

In an argon glove box with a dew point of -60°C or less, 250 g of LTO was weighed and mixed with 136 g of tetralin and 15.0 g of a dispersant solution containing a dispersant at a concentration of 5 mass% to prepare a liquid mixture. As the dispersant, 1-hydroxyethyl-2-alkenylimidazoline was used. As the solvent for the dispersant solution, tetralin was used. This liquid mixture was subjected to dispersing and kneading using a benchtop digital ultrasonic homogenizer (SONIFIER SFX550, manufactured by Branson Ultrasonics Corporation). Then, 43.4 g of a second binder solution containing the second binder at a concentration of 5 mass%, 2.75 g of vapor-grown carbon fiber (VGCF-H, manufactured by Showa Denko K.K.), and 84.0 g of LPS were added to the liquid mixture, and dispersing and kneading were performed to prepare a slurry. As the second binder, a mixture was used that included a hydrogenated styrenic thermoplastic elastomer (modified SEBS, Tuftec MP10, manufactured by Asahi Kasei Corporation) and a hydrogenated block copolymer (SEBS, G1633, manufactured by KRATON CORPORATION) in a mass ratio of 1:1. As the solvent for the second binder solution, tetralin was used. "Tuftec" is a registered trademark of Asahi Kasei Corporation. Subsequently, the slurry was applied onto the current collector of Example 1-1, and the resulting coating film was dried at 100°C for 1 hour in a vacuum atmosphere to fabricate the electrode plate of Example 2-1.

[Measurement of Peel Strength]

The peel strength between the electrode layer and the current collector of the electrode plate of Example 2-1 was measured in a dry room with a dew point of -50°C or less, using a universal material testing machine (RTH-1310, manufactured by A&D HOLON Holdings Company, Limited) in the following manner. First, a 15-mm-wide cut piece of the electrode plate and a test plate were adhered to each other using a double-sided adhesive tape. In detail, the electrode layer of the electrode plate was bonded to the test plate using via the double-sided adhesive tape. Subsequently, the electrode layer was peeled off from the current collector at a peel angle of 90° and a peel rate of 5 mm/min using the testing machine equipped with a jig for 90° peel tests of adhesive tape. After the measurement started, the measured values for the initial 5 mm length peeled off from the current collector were excluded, and then the measured values (unit: N) recorded continuously for 5 mm length of the electrode layer peeled off from the current collector were obtained. The average value (Av) of the values obtained by dividing each measured value by the width of the electrode plate is defined as the peel strength (unit: N/m) between the electrode layer and the current collector of the electrode plate.

[Fabrication of Battery]

The positive electrode and the solid electrolyte sheet were each punched out to a size of 20 mm x 20 mm in an argon glove box with a dew point of -60°C or less. The positive electrode included a positive electrode active material layer and a positive electrode current collector. The positive electrode active material layer included a positive electrode active material layer composed of $LiNbO_3$-coated NCA, LPS, a modified SBR, vapor-grown carbon fiber, acetylene black, and a dispersant. As the positive electrode current collector, a carbon-coated aluminum foil (SDX (registered trademark), manufactured by Showa Denko K.K.) was used. The solid electrolyte sheet included a solid electrolyte layer disposed on a polyimide substrate. The electrolyte layer included LPS, a modified SBR, and a dispersant.

Subsequently, the positive electrode, the solid electrolyte sheet, and a silicone rubber film were stacked in this order inside a mold to fabricate a stack. The stack was pressed at 80°C under a pressure of 40 MPa to transfer the solid electrolyte layer onto the positive electrode thus to fabricate a stack composed of the positive electrode and the solid electrolyte layer. The polyimide substrate and the silicone rubber film were removed from the stack, and then the electrode plate of Example 2-1 serving as the negative electrode, the solid electrolyte layer, the positive electrode, and a silicone rubber film were stacked in this order inside the mold to fabricate a power generating element. The power generating element was pressure-molded at 160°C under a pressure of 580 MPa pressure. The silicone rubber film was removed, and the peripheral edge portions of the power generating element were cut off using a die cutter. A copper foil with tab leads was attached to each of the negative electrode current collector and the positive electrode current collector. The power generating element was vacuum-sealed inside a container made of an aluminum-laminated film to fabricate the battery of Example 2-1.

[Charge and Discharge Test]

A charge and discharge test was performed in the same manner as in Example 1-1, except that the temperature for the high-temperature cycle test was set to 60°C and that the charge and discharge cycle was repeated 90 times. Thus, the discharge capacity retention ratio of the battery of Example 2-1 was measured. The ratio of the discharge capacity at the 90th cycle to the initial discharge capacity was defined as the discharge capacity retention ratio.

<Example 2-2>

An electrode plate and a battery were fabricated in the same manner as in Example 2-1, except that an acrylic resin (PMMA, manufactured by Sigma-Aldrich Co., LLC., weight-average molecular weight of 15,000) was used as the second binder. Furthermore, the peel strength of the electrode plate and the discharge capacity retention ratio of the battery were measured.

<Comparative Example 2-1>

An electrode plate and a battery were fabricated in the same manner as in Example 2-1, except that the current collector of Comparative Example 1-2 was used. Furthermore, the peel strength of the electrode plate and the discharge capacity retention ratio of the battery were measured.

<Comparative Example 2-2>

An electrode plate and a battery were fabricated in the same manner as in Example 2-2, except that the current collector of Comparative Example 1-2 was used. Furthermore, the peel strength of the electrode plate and the discharge capacity retention ratio of the battery were measured.

These results are shown in Table 2.

[Table 2]

|  | First binder | Degree of imidization (%) | Moisture content when heating to 200°C (mass ppm) | Second binder | Peel strength (N/m) | Discharge capacity retention ratio (%) |
|---|---|---|---|---|---|---|
| Example 2-1 | Polyimide | 100 | 70 | Mixture of modified SEBS and SEBS | 0.51 | 95.9 |
| Example 2-2 | Polyimide | 100 | 70 | PMMA | Not measurable | 96.1 |
| Comparative Example 2-1 | Polyimide | 82 | 225 | Mixture of modified SEBS and SEBS | 0.48 | 91.9 |
| Comparative Example 2-2 | Polyimide | 82 | 225 | PMMA | Not measurable | 93.5 |

In the current collector of Comparative Example 1-2 used in Comparative Example 2-1 and Comparative Example 2-2, the degree of imidization of the polyimide used as the first binder of the coating layer was below 90%, and the moisture content of the current collector measured when heating to 200°C greatly exceeded 200 mass ppm. Consequently, the batteries of Comparative Example 2-1 and Comparative Example 2-2 exhibited low discharge capacity retention ratios.

In contrast, in the current collector of Example 1-1 used in Example 2-1 and Example 2-2, the degree of imidization of the polyimide used as the first binder of the coating layer was 90% or more, and the moisture content of the current collector measured when heating to 200°C was 200 mass ppm or less. Consequently, the batteries of Example 2-1 and Example 2-2 exhibited high discharge capacity retention ratios.

As shown in Table 2, Example 2-2 used an electrode plate in which PMMA was used as the second binder included in the electrode layer. However, owing to its extremely low peel strength, peeling occurred during jig attachment prior to the peel test measurement, making the measurement impossible. On the other hand, in Example 2-1 in which an electrode plate using a styrenic elastomer (mixture of modified SEBS and SEBS) as the second binder included in the electrode layer was used, a high peel strength of 0.5 N/m or more was exhibited.

INDUSTRIAL APPLICABILITY

The current collector of the present disclosure can be used in electrochemical devices such as batteries and capacitors.

**Claims**

**1.** A current collector comprising:

a substrate; and
a coating layer coating the substrate, wherein
the coating layer comprises conductive carbon and a first binder,
the first binder comprises an aromatic super engineering plastic, and
a moisture content calculated based on moisture generated from the current collector when heated to 200°C is 200 mass ppm or less.

2. The current collector according to claim 1, wherein
a tensile strength of the current collector is 120 N/mm$^2$ or more.

3. The current collector according to claim 1, wherein
the aromatic super engineering plastic comprises at least one selected from the group consisting of a polyimide and a polyethersulfone.

4. The current collector according to claim 3, wherein
a degree of imidization of the polyimide is 90% or more.

5. The current collector according to claim 1, wherein
the substrate comprises aluminum or an aluminum alloy.

6. The current collector according to claim 1, wherein
the moisture content is 100 mass ppm or less.

7. An electrode plate comprising:

the current collector according to claim 1; and
an electrode layer comprising a second binder, the electrode layer being disposed on the current collector.

8. The electrode plate according to claim 7, wherein
the second binder comprises a styrenic elastomer.

9. The electrode plate according to claim 7, wherein
the electrode layer further comprises a solid electrolyte.

10. The electrode plate according to claim 9, wherein
the solid electrolyte comprises a sulfide solid electrolyte.

11. A battery comprising:

a positive electrode;
a negative electrode; and
an electrolyte layer positioned between the positive electrode and the negative electrode, wherein
at least one selected from the group consisting of the positive electrode and the negative electrode comprises the electrode plate according to claim 7.

<u>100</u>

FIG.1

<u>1000</u>

FIG.2

2000

FIG.3

2001

FIG.4

# INTERNATIONAL SEARCH REPORT

| International application No. |
| --- |
| **PCT/JP2023/032148** |

| | |
| --- | --- |
| **A.** | **CLASSIFICATION OF SUBJECT MATTER** |

*H01M 4/66*(2006.01)i; *H01G 11/38*(2013.01)i; *H01G 11/56*(2013.01)i; *H01G 11/68*(2013.01)i; *H01G 11/70*(2013.01)i; *H01M 4/02*(2006.01)i; *H01M 4/13*(2010.01)i; *H01M 4/62*(2006.01)i; *H01M 10/0562*(2010.01)i; *H01M 10/058*(2010.01)i
FI:    H01M4/66 A; H01G11/38; H01G11/56; H01G11/68; H01G11/70; H01M4/02 Z; H01M4/13; H01M4/62 Z; H01M10/0562; H01M10/058

According to International Patent Classification (IPC) or to both national classification and IPC

| | |
| --- | --- |
| **B.** | **FIELDS SEARCHED** |

Minimum documentation searched (classification system followed by classification symbols)

H01M4/66; H01G11/38; H01G11/56; H01G11/68; H01G11/70; H01M4/02; H01M4/13; H01M4/62; H01M10/0562; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2013-101919 A (NATIONAL INST. OF ADVANCED INDUSTRIAL & TECHNOLOGY) 23 May 2013 (2013-05-23) claims 1, 6, examples | 1-6, 11 |
| Y | | 7-10 |
| Y | JP 2019-102141 A (TOYOTA MOTOR CORP.) 24 June 2019 (2019-06-24) claims 1, 7, paragraphs [0002]-[0018], [0051] | 7-10 |
| Y | WO 2011/013756 A1 (ZEON CORP.) 03 February 2011 (2011-02-03) paragraphs [0080]-[0081] | 7-10 |
| Y | WO 2022/138896 A1 (ASAHI KASEI KK) 30 June 2022 (2022-06-30) claim 1, paragraph [0010] | 7-10 |

☐ Further documents are listed in the continuation of Box C.      ☑ See patent family annex.

| | |
| --- | --- |
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 October 2023** | **07 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032148**

| Patent document cited in search report | | | Publication date (day/month/year) | Patent family member(s) | Publication date (day/month/year) |
|---|---|---|---|---|---|
| JP | 2013-101919 | A | 23 May 2013 | (Family: none) | |
| JP | 2019-102141 | A | 24 June 2019 | US 2019/0165357 A1 claims 1, 7, paragraphs [0003]-[0019], [0064] CN 109841894 A | |
| WO | 2011/013756 | A1 | 03 February 2011 | CN 102549693 A paragraphs [0053]-[0055] KR 10-2012-0040223 A | |
| WO | 2022/138896 | A1 | 30 June 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018190527 A

- JP 2010003614 A